# EUROPEAN PATENT APPLICATION

(11) **EP 4 580 035 A1**
(43) Date of publication of application: **02.07.2025**
(21) Application number: 24221049.0
(22) Date of filing: 18.12.2024
(51) Int. Cl.: H02P 6/32, H02P 25/03, H02M 7/5395, H02P 27/08, H02P 9/30, B60L 53/12, B60L 53/30, B60L 53/35, B60L 15/20

(54) **PULSE WIDTH MODULATION GENERATION STRATEGY**

(30) Priority: 30.12.2023 FR 2315525
(71) Applicant: Valeo eAutomotive Germany GmbH, 91056 Erlangen (DE)
(72) Inventor: SELMEIER, Markus, 91056 Erlangen (DE); ELDALEEL, Mohamed, 12577 Le Caire (EG)
(74) Representative: Valeo Powertrain Systems

(57) **Abstract**

The present invention relates to a method of pulse width modulation (PWM) generation for a converter of an electric or hybrid vehicle electric machine, the converter being operated with phase shifts with a duty cycle associated with a phase shift, the converter providing voltage (20) to a transformer of the electric machine (1), the method of pulse width modulation generation comprising operating the converter with requests of duty cycle change, with a subdivision period (22) being defined between two requests of duty cycle change, the method of pulse width modulation generation being characterized in that half of the duty cycle is applied at the start of said subdivision period (22) and half of the duty cycle is applied at the end of said subdivision period (22).

## Description

The present invention relates to the fields of electronics and electrical engineering, and more particularly to the field of electric machines.

Electric machines may be used in electric and hybrid vehicles in order to provide torque to the wheels of the vehicle. The motor can for instance be an electrically excited synchronous machine or EESM. The EESM is an alternative to permanent magnet synchronous machines as the latter require the usage of rare-earth materials.

In an EESM, energy must be transferred from a non-rotating part, i.e. the stator of the electric machine, to a rotating part, i.e. the rotor. Such power transfer can either be conductive or inductive, but nowadays an inductive power transmission seems to be preferable as it causes no mechanical loss and it is maintenance-free.

In an inductive electrically excited synchronous machine or iEESM, the stator and the rotor are associated with a converter, a transformer and a rectifier. The converter provides voltage to the transformer, and the rectifier is connected between the transformer and the rotor to provide a desired positive voltage to the rotor windings.

For dynamic and efficient torque control of the iEESM, it is necessary to change the rotor current according to the requested torque and further boundary conditions (e.g. DC voltage, current limits, motor speed). The torque request usually follows the driver's request on the accelerator pedal/or the brake pedal of the car. The torque request thus changes overtime, and as such it is necessary to quickly change the torque of the electric machine. Consequently, the voltage provided to the rotor windings of the iEESM must also change rapidly, which is why it is important to correctly operate the converter.

Various pulse width modulation (PWM) generation strategies to operate the converter exist in the prior art. For instance, it is known to generate voltage pulses so that they are centered within a PWM half-period. This however creates DC offsets in dynamic operation conditions, i.e. when the duty cycle of the converter changes, and as a result it causes saturation in the transformer in dynamic conditions. This saturation is caused by the transformer currents not staying within certain limits, e.g. due to a flux imbalance, and it leads to less energy being transferred from a primary side of the transformer to a secondary side.

Other PWM generation strategies may correct the saturation issues but lead to duty cycle errors in dynamic conditions. Such duty cycle errors would cause unexpected limitations to the output voltage of the transformer. This would lead to a reduced dynamic response in the current control loop, which must be avoided due to strict requirements in regards of transient torque response characteristics.

The present invention fits into this context by providing a PWM generation strategy in which saturation issues are corrected and duty cycle errors are avoided by aligning half of a given duty cycle of the converter with the start of a given time period and the other half of the duty cycle with the end of said time period.

In this context, the present invention is directed to a method of pulse width modulation (PWM) generation for a converter of an electric or hybrid vehicle electric machine, the converter being operated with phase shifts with a duty cycle associated with a phase shift, the converter providing voltage to a transformer of the electric machine, the method of pulse width modulation generation comprising operating the converter with requests of duty cycle change, with a subdivision period being defined between two requests of duty cycle change, the method of pulse width modulation generation being characterized in that half of the duty cycle is applied at the start of said subdivision period and half of the duty cycle is applied at the end of said subdivision period.

The pulse width modulation or PWM generation strategy according to the invention is used to operate a DC/AC converter, which is here integrated in an electric machine. Such electric machine is more precisely an inductive electrically excited synchronous machine or iEESM. It comprises, along with the converter, various other components among which a transformer and a rectifier.

The converter is a phase shift full bridge converter or PSFBC, which is operated via the PWM generation method with phase shifts with which a duty cycle ratio is associated. The converter provides bipolar rectangular voltages which are applied to the transformer, more precisely to a primary side of this transformer. A secondary side of the transformer comprises a rectifier, which is required to provide a desired positive voltage to the rotor windings. The primary side of the transformer is on a non-rotating part of the electric machine, whereas the secondary side of the transformer is on the rotating part of the electric machine.

The PWM generation method consists in operating the converter with requests of duty cycle change. A duty cycle change is a duty cycle update. Requests of duty cycle which are changing over time. Two consecutive requests of duty cycle change define a subdivision period. In this subdivision period, half of the duty cycle is applied at the beginning and the other half is applied at the end. As a result, the duty cycles are aligned with the start and the end of a given subdivision period.

With such a PWM generation method, a flux balancing is achieved both in steady state and in dynamic operation conditions, thus avoiding saturation in the transformer. Furthermore, no duty cycle error is created as the duty cycles start at the same time as a subdivision period; in other words, the duty cycles and the subdivision periods are coordinated, the requested duty cycle matching the real duty cycle in dynamic operation conditions, without any need for a correction or special treatment of the PWM generation.

According to an optional characteristic of the invention, the subdivision period corresponds to a multiple of one PWM half-period.

As an example, the subdivision period may equal one PWM half-period. In other words, a PWM half-period corresponds to the interval between a first request of duty cycle change and a second request of duty cycle change. Of course, other integer multiples of one PWM half-period may alternatively be used to define the subdivision period. According to an optional characteristic of the invention, the converter generates at least one positive voltage pulse and at least one negative voltage pulse over a given subdivision period.

This allows for a repartition of a magnetic flux of the converter over a given subdivision period.

According to an optional characteristic of the invention, a magnetic flux of positive voltage pulses is equal to a magnetic flux of negative voltage pulses over a PWM half-period.

As an example, there are as many positive voltage pulses as negative voltage pulses within a given PWM half-period. Over a PWM period, the added value of the positive voltage pulses and the added value of the negative voltage pulses cancel out. The magnetic flux of the converter is thus balanced.

According to an optional characteristic of the invention, when the subdivision period corresponds to one PWM half-period, over a given PWM half-period a positive pulse corresponding to half the duty cycle is generated at the start of the PWM half-period, and a negative pulse corresponding to half the duty cycle is generated at the end of the PWM half-period.

In such case, the positive pulse corresponds to a left-aligned pulse within the given PWM half-period and the negative pulse to a right-aligned pulse.

According to an optional characteristic of the invention, when the subdivision period corresponds to one PWM half-period, over a given PWM half-period a negative pulse corresponding to half the duty cycle is generated at the start of the PWM half-period, and a positive pulse corresponding to half the duty cycle is generated at the end of the PWM half-period.

In such case, the negative pulse corresponds to a left-aligned pulse within the given PWM half-period and the positive pulse to a right-aligned pulse.

According to an optional characteristic of the invention, when the subdivision period corresponds to one PWM period, over a given PWM period a first negative pulse corresponding to half the duty cycle is generated at the start of the PWM period, a positive pulse corresponding to the duty cycle is generated in the middle of the PWM period, and a second negative pulse corresponding to half the duty cycle is generated at the end of the PWM period.

The first negative pulse thus corresponds to the left-aligned pulse within the given PWM period while the second negative pulse corresponds to the right-aligned pulse. When they are added together, the duty cycles corresponding to the first negative pulse and the second negative pulse equal the duty cycle corresponding to the positive pulse.

According to an optional characteristic of the invention, when the subdivision period corresponds to one PWM period, over a given PWM period a first positive pulse corresponding to half the duty cycle is generated at the start of the PWM period, a negative pulse corresponding to the duty cycle is generated in the middle of the PWM period, and a second positive pulse corresponding to half the duty cycle is generated at the end of the PWM period.

In this alternative, the first positive pulse and the second positive pulse respectively correspond to the left-aligned pulse and the right-aligned pulse within the given PWM period. The combination of the duty cycle corresponding to the first positive pulse and the duty cycle corresponding to the second positive pulse is equal to the duty cycle corresponding to the negative pulse.

According to an optional characteristic of the invention, the voltage pulses start when a primary transformer current of the transformer equals zero.

This is a result of the transformer flux being balanced, which itself is the result of the positive and negative voltage pulses being balanced.

Other characteristics, details and advantages of the invention will become clearer on reading the following description, on the one hand, and several examples of realisation given as an indication and without limitation with reference to the schematic drawings annexed, on the other hand, on which:
[Fig. 1] is a schematic representation of an electric machine for an electric or hybrid vehicle, the electric machine comprising a rotor, a stator and a transmitter comprising a rectifier and a transformer;
[Fig. 2] is another schematic representation of part of the electric machine of figure 1, further comprising a converter;
[Fig. 3] is a schematic representation of an output voltage control of the converter;
[Fig. 4] is a schematic representation of a first embodiment of a PWM generation method according to the invention;
[Fig. 5] is a schematic representation of corresponding waveforms from the first embodiment;
[Fig. 6] is a schematic representation of a second embodiment of the PWM generation method according to the invention.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

Like numbers refer to like elements throughout drawings.

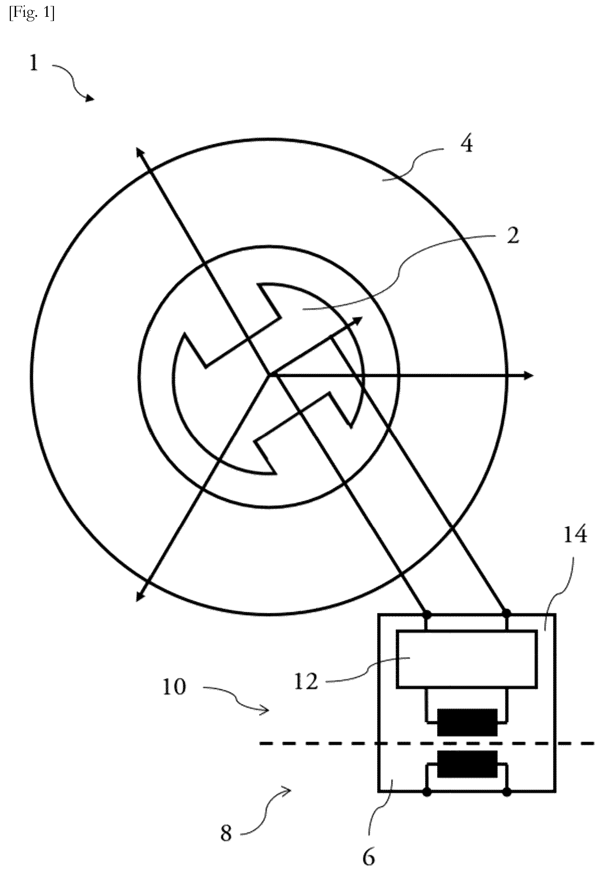

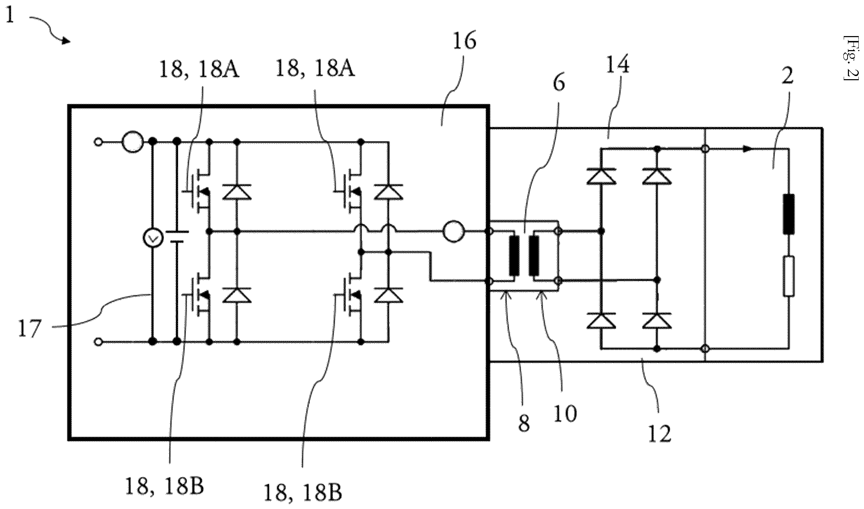

Figures 1 and 2 are schematic representations of an electric machine 1, or part of said electric machine 1. The electric machine 1 is destined to be mounted in a vehicle such as an electric or hybrid vehicle, where it can be used to provide torque to wheels of the vehicle. Here, the electric machine 1 is an inductive electrically excited synchronous machine, which is also known as its acronym iEESM.

As can be seen on Figure 1, the electric machine 1 comprises a rotor 2 and a stator 4. In this example, the stator 4 is positioned around the rotor 2, but in other embodiments the rotor 2 could be positioned around the stator 4. In inductive electrically excited synchronous machines such as this electric machine 1, power is transferred to a winding mounted on the rotor 2 using a transformer 6. The transformer 6 is more precisely a rotating high frequency transformer. The transformer 6 comprises a primary side 8 and a secondary side 10, these two sides 8, 10 being different in that the primary side 8 is on a non-rotating part of the electric machine 1, i.e the stator, whereas the secondary side 10 is on a rotating part of said electric machine 1, i.e the rotor. On Figure 1, a separation between the non-rotating part and the rotating part is illustrated as a dashed line.

A rectifier 12 is associated with the transformer 6. The rectifier 12 is a rotating rectifier, and as such it is positioned on the secondary side 10 of the transformer 6, i.e. on the rotating part of the electric machine 1. The role of the rectifier 12 is to provide only positive voltage to the rotor 2. This rectifier 12 is, along with the transformer 6, implemented in a transmitter 14, here an inductive transmitter.

As is visible on Figure 2, a converter 16 is connected to the primary side 8 of the transformer 6. The converter 16 is a phase shift full bridge converter or PSFBC. It works at a variable pulse width modulation frequency, or PWM frequency. The PWM frequency of the converter 16 can indeed vary in a wide range, for instance from 5 to 100 kHz, depending on the design of the converter 16 and/or the transformer 6 and/or a required current in the rotor 2.

The converter 16 is controlled by an electronic control unit of the electric machine such as a microcontroller, a field-programmable gate array (FPGA) or a digital signal processor (DSP) to convert direct current coming from a battery of the vehicle into alternating current in order to provide an appropriate voltage to the primary side 8 of the transformer 6. The converter 16 may also comprise an input capacitor 17. As shown here, the converter 16 comprises four transistors 18, with two top transistors 18A and two bottom transistors 18B. Each top transistor 18A is associated with a bottom transistor 18B and they are controlled inversely. In order to avoid short circuits, notably of the input capacitor 17, an additional interlock time is introduced in the electric machine 1. This additional interlock time leads to a delayed switch-on command of the top transistor 18A or the bottom transistor 18B of one half-bridge compared to the switch-off command for the top transistor 18A or the bottom transistor 18B of one half-bridge.

The converter 16 is operated following a PWM generation method or PWM generation strategy according to the invention in order to implement a dynamic and efficient torque control of the electric machine 1. To this end, the converter 16 is operated by phase shifts, with each phase shift being comprised between 0 and 180 °. Additionally, a duty cycle ratio is associated with each phase shift of the converter 16, such duty cycle ratio being comprised between 0 and 1.

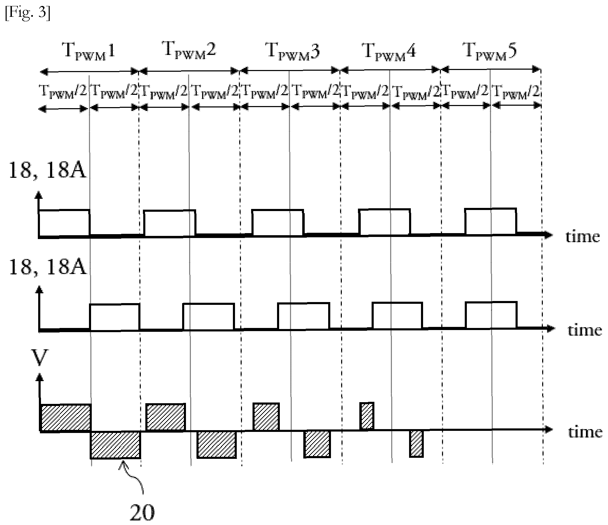

Figure 3 illustrates the relationship between the phase shifts, the duty cycles associated with these phase shifts, and the voltage pulses that are applied in relation to these duty cycles. To do this, Figure 3 illustrates five successive PWM periods, with a phase shift that is modified with each PWM period change. During first PWM period T_{PWM}1, a phase shift of 180 ° between the first top transistor 18A and the second top transistor 18A corresponds to a duty cycle ratio of 1, and the duration of application of voltage pulses corresponds to the full duration of this first PWM period T_{PWM}1. During second PWM period T_{PWM}2, a phase shift of 135 ° between the first top transistor 18A and the second top transistor 18A corresponds to a duty cycle ratio of 0.75. During third PWM period T_{PWM}3, a phase shift of 90 ° between the first top transistor 18A and the second top transistor 18A corresponds to a duty cycle ratio of 0.5, and the duration of application of voltage pulses is half the duration of this third PWM period T_{PWM}3. During fourth PWM period T_{PWM}4, a phase shift of 45 ° between the first top transistor 18A and the second top transistor 18A corresponds to a duty cycle ratio of 0.25. During fifth PWM period T_{PWM}5, a phase shift of 0° between the first top transistor 18A and the second top transistor 18A corresponds to a duty cycle ratio of 0, and no voltage pulse is applied.

The converter 16 generates a voltage waveform 20, such waveform 20 being visible on Figures 3, 4 and 6. The voltage waveform 20 can be divided into a plurality of PWM periods. Generally speaking, for a duty cycle ratio equal to 1, positive or negative voltages are applied successively during all given PWM period, without zero voltage values, each positive or negative voltage being applied during half of the PWM period, whereas for a duty cycle ratio equal to 0.5 for instance, positive and negative voltages are applied for smaller duration during the given PWM period, with zero voltage values provided between them, each positive or negative voltage being applied for half the time of what is done for the duty cycle ratio equal to 1.

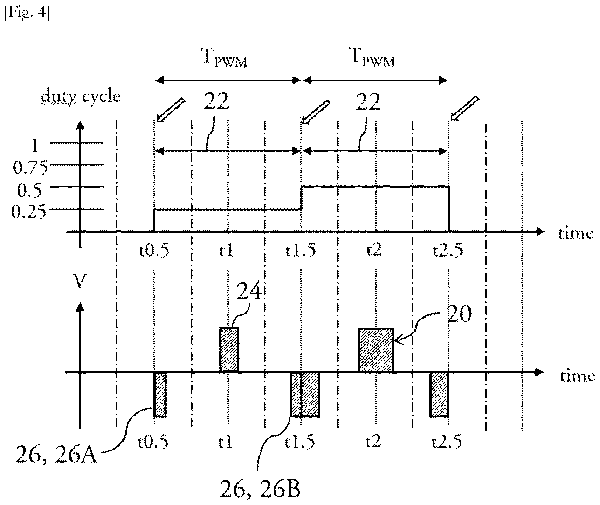

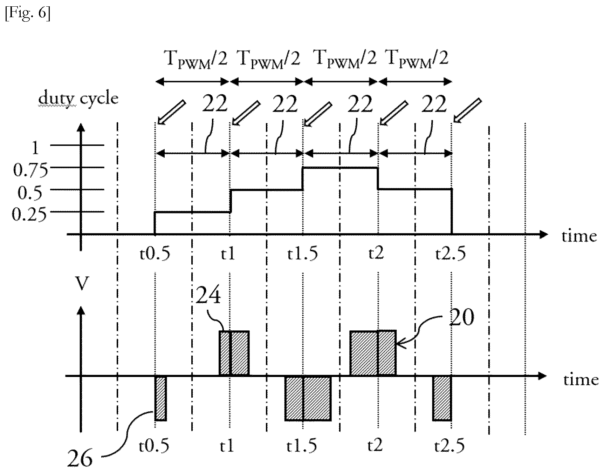

For the duty cycles to change, the converter 16 is operated with requests of duty cycle change. Such requests of duty cycle change are pointed out by white arrows on Figures 4 and 6, which respectively represent a first embodiment and a second embodiment. On these two figures, a requested duty cycle is represented on the top and the voltage pulses implemented according to the PWM generation method according to the invention to obtain said duty cycle are represented on the bottom.

Two consecutive requests of duty cycle change define a subdivision period 22. This subdivision period 22 corresponds to a PWM period on the first embodiment of Figure 4, whereas it corresponds to a PWM half-period on the second embodiment of Figure 6. In other words, the request of duty cycle change occurs every PWM period in the first embodiment, while it occurs every PWM half-period in the second embodiment. More generally, the subdivision period 22 may correspond to any integer multiple of one PWM half-period, which means that the request of duty cycle change may occur every multiple of one PWM half-period. Preferably, the subdivision period 22 corresponds to a control period. Such control period is defined by a period of time in which a particular voltage is obtained. As a result, the control period may be equal to a PWM period according to the first embodiment or to a PWM half-period according to the second embodiment. Requests of duty cycle change thus occur between two successive control periods.

According to the invention, the PWM generation method is such that half of the duty cycle is applied at the start of a given subdivision period 22 and half of the duty cycle is applied at the end of said subdivision period 22.

In both embodiments, it should be noted that the converter 16 generates at least one positive voltage pulse 24 and at least one negative voltage pulse 26 for each subdivision period 22. More particularly, in the first embodiment the converter 16 generates, for each subdivision period 22 corresponding to one PWM period, one positive voltage pulse 24 and two negative voltage pulses 26. In the second embodiment on the other hand, the converter 16 generates exactly one positive voltage pulse 24 and one negative voltage pulse 26 for each subdivision period 22 corresponding to one PWM half-period.

As mentioned before, in the first embodiment of Figure 4, i.e. for a subdivision period 22 equal to one PWM period, the request of duty cycle change occurs every such PWM period. For a duty cycle of 0.25 being requested at a first time t0.5, half of the duty cycle, meaning 0.125, is realized at the beginning of the PWM period at the first time t0.5, and the other half of the duty cycle, which is also 0.125, is realized at the end of the PWM period at a second time t1.5. Similarly, for a duty cycle of 0.5 being requested at the second time t1.5, half of the duty cycle, meaning 0.25, is realized at the beginning of the PWM period at the second time t1.5, and the other half of the duty cycle, which is also 0.25, is realized at the end of the PWM period at a third time t2.5.

Moreover, in that first embodiment, as the subdivision period 22 is of one PWM period, there is an additional pulse at the middle of the PWM period in order to provide the appropriate voltage during the PWM period to obtain the requested duty cycle. As it is represented on figure 4, for each PWM period there is a first pulse 26A, here a negative pulse 26A, corresponding to half the duty cycle which is generated at the start of the PWM period, then a additional pulse 24 of the opposite sign, here a positive pulse 24, corresponding to the duty cycle which is generated in the middle of the PWM period, and a second pulse 26B, here a second negative pulse 26B, corresponding to half the duty cycle which is generated at the end of the PWM period. Thus, after the first request of duty cycle change of the first embodiment, the first negative pulse 26A corresponding to a 0.125 duty cycle starts at the first time t0.5, the positive pulse 24 corresponding to a 0.25 duty cycle is generated so that it is centered around the fourth time t1, and the second negative pulse 26B corresponding to a 0.125 duty cycle is generated so that it ends at the second time t1.5.

By considering two successive subdivision periods 22 with a first subdivision period 22 associated to a duty cycle request of 0.25 and a second subdivision period 22 associated to a duty cycle request of 0.5, it results from the strategy of the invention that a first pulse, here a negative pulse 26A, corresponding to a duty cycle of 0.125 is generated at the beginning of the first subdivision period 22, that a second pulse, here a positive pulse 24, corresponding to a duty cycle of 0.25 is then generated in the middle of the first subdivision period 22, and that a third pulse, here another negative pulse 26B, is then generated, said third pulse corresponding to a duty cycle of 0.325, which corresponds to a duty cycle of 0.125 at the end of the first subdivision period 22 and a duty cycle of 0.25 at the beginning of the second subdivision period 22.

Although it is not illustrated here, there could be a variant of the first embodiment of the invention wherein it is a first positive pulse 24A corresponding to half the duty cycle which is generated at the start of the subdivision period 22, a negative pulse 26 corresponding to the duty cycle which is generated in the middle of the subdivision period 22, and a second positive pulse 24B corresponding to half the duty cycle which is generated at the end of the subdivision period 22.

In the second embodiment of Figure 6, i.e. for a subdivision period 22 which is equal to one PWM half-period, the request of duty cycle change occurs every such PWM half-period; in other words, it occurs twice as much as in the first embodiment. As is visible on Figure 6, for a duty cycle of 0.25 being requested at the first time t0.5, half of the duty cycle, meaning 0.125, is realized at the beginning of the PWM half-period at said first time t0.5, and the other half of the duty cycle, which is also 0.125, is realized at the end of the PWM half-period at a fourth time t1. Similarly, for a following duty cycle of 0.5 being requested at the fourth time t1, half of the duty cycle, meaning 0.25, is realized at the beginning of the PWM half-period at the fourth time t1, and the other half of the duty cycle, which is also 0.25, is realized at the end of the PWM half-period at the second time t1.5.

As it is represented on Figure 6, for a subdivision period 22 of one PWM half-period, for each such PWM half-period there is only one negative pulse 26 corresponding to half the duty cycle which is generated at the start of said PWM half-period and one positive pulse 24 corresponding to half the duty cycle which is generated at the end of the PWM half-period. Thus, after the first request of duty cycle change of the second embodiment, the negative pulse 26 corresponding to a 0.125 duty cycle starts at the first time t0.5, and the positive pulse 24 corresponding to a 0.125 duty cycle ends at the fourth time t1. In the second embodiment, there is no voltage pulse occurring at the middle of the PWM half-period.

Similarly to what has been described for the first embodiment, the second embodiment could alternatively consist in a positive pulse 24 corresponding to half the duty cycle being generated at the start of the subdivision period 22 and a negative pulse 26 corresponding to half the duty cycle being generated at the end of said subdivision period 22, without extending beyond the scope of the invention.

As a result of what has been described hereinbefore, be it for the first embodiment of Figure 4 or the second embodiment of Figure 6, for a given subdivision period 22 the positive and negative voltage pulses 24, 26 are balanced. In other words, over a PWM period or a PWM half-period for the first embodiment and the second embodiment respectively, a magnetic flux of positive voltage pulses 24 is equal to a magnetic flux of negative voltage pulses 26.

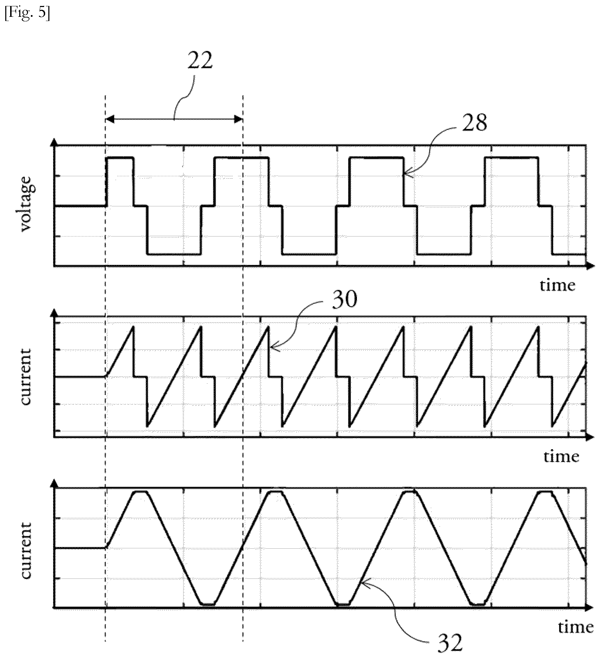

On Figure 5, which pertains to the first embodiment wherein a subdivision period 22 equals one PWM period, different waveforms are illustrated. These waveforms correspond, from top to bottom, to a transformer input voltage waveform 28, a converter input current waveform 30 and a primary transformer current waveform 32 generated in the transformer 6. It is here meant by "corresponding" that the transformer input voltage waveform 28, the converter input current waveform 30 and the primary transformer current waveform 32 are observed in the same PWM periods.

As is visible on this Figure 5, there is no deflection in the waveforms; positive and negative pulses are balanced in the transformer input voltage waveform 28, in the converter input current waveform 30 and in the primary transformer current waveform 32. More precisely, the primary transformer current waveform 32 is symmetric around the 0 current line, which is characteristic of a balanced primary transformer current. Such balanced primary transformer current is wanted as it means that saturation and/or the flux imbalance of the transformer 6 is prevented.

In addition, there is no duty cycle offset in the waveforms, in particular is there is no error between requested duty cycle and realized duty cycle; as the result of the primary transformer current being balanced, the voltage pulses start when the primary transformer current of the transformer 6 equals zero. Consequently, decreases in the dynamic response of the torque control are avoided.

The present invention thus covers a PWM generation strategy which generates a balanced transformer flux with no duty cycle error, by aligning duty cycles of the converter with the start and the end of a given predefined time period.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of pulse width modulation (PWM) generation for a converter (16) of an electric or hybrid vehicle electric machine (1), the converter (16) being operated with phase shifts with a duty cycle associated with a phase shift, the converter (16) providing voltage (20) to a transformer (6) of the electric machine (1), the method of pulse width modulation generation comprising operating the converter (16) with requests of duty cycle change, with a subdivision period (22) being defined between two requests of duty cycle change, the method of pulse width modulation generation being **characterized in that** half of the duty cycle is applied at the start of said subdivision period (22) and half of the duty cycle is applied at the end of said subdivision period (22).

2. The method of pulse width modulation generation according to the preceding claim, wherein the subdivision period (22) corresponds to a multiple of one PWM half-period.

3. The method of pulse width modulation generation according to any of the preceding claims, wherein the converter (16) generates at least one positive voltage pulse (24) and at least one negative voltage pulse (26) over a given subdivision period (22).

4. The method of pulse width modulation generation according to any of the preceding claims, wherein a magnetic flux of positive voltage pulses (24) is equal to a magnetic flux of negative voltage pulses (26) over a PWM half-period.

5. The method of pulse width modulation generation according to any of the preceding claims in combination with claim 2, wherein when the subdivision period (22) corresponds to one PWM half-period, over a given PWM half-period a positive pulse (24) corresponding to half the duty cycle is generated at the start of the PWM half-period, and a negative pulse (26) corresponding to half the duty cycle is generated at the end of the PWM half-period.

6. The method of pulse width modulation generation according to any of claims 1 to 4 in combination with claim 2, wherein when the subdivision period (22) corresponds to one PWM half-period, over a given PWM half-period a negative pulse (26) corresponding to half the duty cycle is generated at the start of thePWM half-period, and a positive pulse (24) corresponding to half the duty cycle is generated at the end of the PWM half-period.

7. The method of pulse width modulation generation according to any of the preceding claims in combination with claim 2, wherein when the subdivision period (22) corresponds to one PWM period, over a given PWM period a first negative pulse (26A) corresponding to half the duty cycle is generated at the start of the PWM period, a positive pulse (24) corresponding to the duty cycle is generated in the middle of the PWM period, and a second negative pulse (26B) corresponding to half the duty cycle is generated at the end of the PWM period.

8. The method of pulse width modulation generation according to any of claims 1 to 6 in combination with claim 2, wherein when the subdivision period (22) corresponds to one PWM period, over a given PWM period a first positive pulse (24A) corresponding to half the duty cycle is generated at the start of the PWM period, a negative pulse (26) corresponding to the duty cycle is generated in the middle of the PWM period, and a second positive pulse (24B) corresponding to half the duty cycle is generated at the end of the PWM period.

9. The method of pulse width modulation generation according to any of the preceding claims, wherein the voltage pulses (24, 26) start when a primary transformer current of the transformer (6) equals zero.
